# EUROPEAN PATENT APPLICATION

(11) **EP 1 274 269 A1**
(43) Date of publication of application: **08.01.2003**
(21) Application number: 01305710.4
(22) Date of filing: 02.07.2001
(51) Int. Cl.: H04Q 7/38, H04Q 7/32

(54) **Automatic control of mobile telephone operating mode**

(71) Applicant: LUCENT TECHNOLOGIES INC., Murray Hill, New Jersey 07974-0636 (US)
(72) Inventor: Bocconi, Stefano, 1082 JV Amsterdam (NL)
(74) Representative: Sarup, David Alexander

(57) **Abstract**

The node of operation of a mobile telephone is automatically switched upon entry into a user space, like a room, a conference hall etc. A transmitter is located to generate a wireless control signal at least at an entrance to the user space. A mobile telephone contains a receiver for the wireless control signal The receiver is the telephone function to switch between different modes of operation upon detection, from the wireless signal, that the mobile phone passes said entrance. Thus, the mobile can be switched off or switched to a soundless ringing mode upon entry into the space and back to a normal mode upon exit from the space.

## Description

### Field of the invention

The invention relates to mobile telephones and to a system containing such mobile telephones.

### Background of the invention.

Mobile telephones have become common. So much so that under certain circumstances they have become a public nuisance. In many localities, such as theaters, conference rooms, aircraft, classrooms etc., the users of mobile telephones are required to switch off their telephones, or at least to ensure that the telephone will not generate an audible alarm. This, however, does not ensure that the telephone will be switch off properly, because it depends on the cooperation of users.

Upon entering other spaces it is desired, on the contrary, that mobile telephones are switched on, or switched to a louder or more perceptible state, for example upon leaving the office or upon entering a space where there are loud noises, such as a factory or a garage.

### Summary of the invention.

Amongst others, it is an object of the invention to provide for a solution that promotes switching of mobile telephones to different states upon entry to certain spaces.

The invention provides for <see claim 1>. By providing the mobile telephones that switch mode automatically upon detection of entry to certain user spaces, it is ensured that the mobile telephone will be in the desired mode without requiring intervention of the user.

In an embodiment of the system according to the invention, the mobile telephone is switched to a non-audible mode, or even a switched-off mode, upon entry to a protected space.

In a further embodiment, the system produces a wireless signal that is detectably different in a first and second region that the mobile phone has to pass through successively when passing through an entrance to a space. In this embodiment, the mobile telephone is arranged to make mode switches dependent on detection of passage through different regions. Thus, unintentional mode switching due to leakage of the signal outside the protected space is counteracted.

### Brief description of the drawing

These and other advantageous aspects of the invention will be described in more detail by reference to the following drawing.
Figure 1 shows an entrance provided with a transmitter
Figure 2 shows a mobile telephone set
Figure 3 shows a further entrance provided with a transmitter

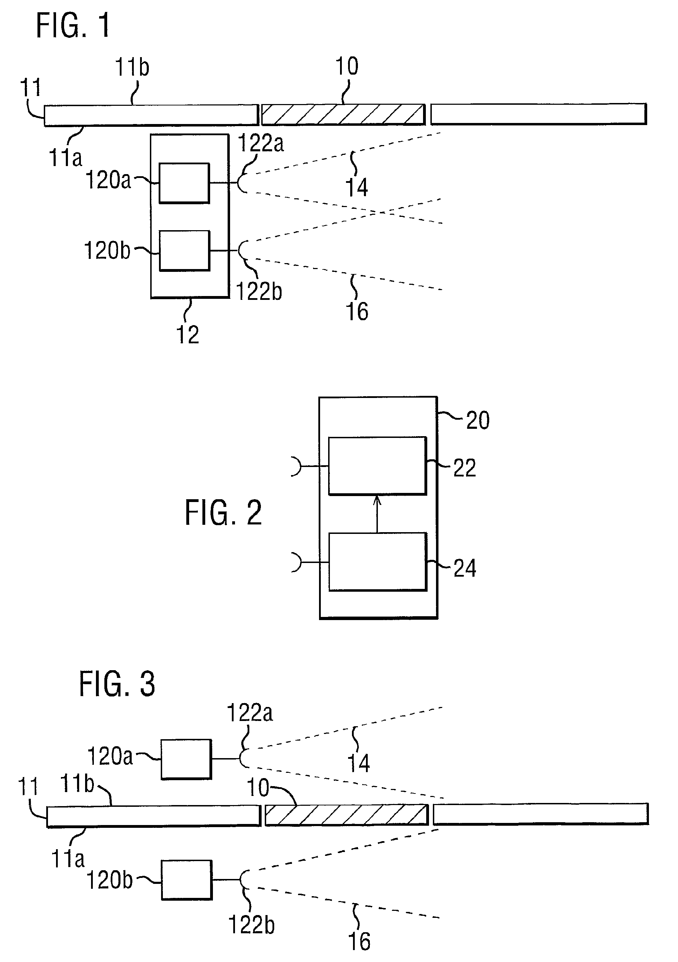

Figure 1 shows an entrance 10 (like a door) in a wall 11. The wall 11 has a first sides 11a facing a user space and a second side 11b facing an outside space (outside the user space). Next to the entrance 10 a transmitter 12 is located (which is generally not a mobile phone base station). The transmitter 12 is shown to contain a first and a second transmitter unit 120a,b, each with an antenna 122a,b. The antennas 122a,b are each shown to transmit a directional beam in regions 14, 16, next to the entrance 10 respectively. Figure 2 shows a mobile telephone 20. The mobile telephone 20 contains a telephone function unit 22 and a receiver 24. Both the telephone function unit 22 and the receiver 24 have an antenna. The receiver 24 is coupled to a control input of the telephone function unit 22.

Figure 3 shows a similar entrance as figure 1, but here the antennas 122a,b are placed on different sides of the entrance 10.

In operation, the transmitter 12 serves to transmit signals that allow a mobile telephone 12 to detect whether it is carried through the entrance 10. When the mobile telephone detects this, it switches modes. If a space has more than one entrance, similar transmitters may be provided at each entrance, so as to account for entry and exit through different entrances.

For example, when the mobile telephone 20 is carried through the entrance 10 in a first direction from the space on the second side 11b of the wall 11 to the space on the first side 11a of the wall 11, the telephone function is switched off entirely, so that the mobile telephone will neither radiate any signals to a base station (not shown) nor receive incoming calls. Nevertheless, the receiver 24 remains active. If the receiver detects that the mobile telephone 20 is carried through the entrance 10 in a second direction (from the space on the first side 11a of the wall 11 to the space on the second side 11b of the wall 11), the receiver signals the telephone function unit 22 to switch back to the normal operating mode, allowing ringing, taking incoming calls generating outgoing calls etc.

Of course, this is but one example of possible mode switches. As an alternative, the telephone function unit 22 might switch to a silent ringing mode, remaining active otherwise, when the receiver detects that the mobile telephone 20 is carried through the entrance 10 in the first direction. As another alternative, the telephone 20 might switch to a mode in which only outgoing calls are accepted, incoming calls being guided to a message box. As further alternative, the telephone 20 might switch to a mode in which the loudness is set to maximum in order to overcome environmental noise. As another alternative, the telephone 20 might be switched on normally, for example upon leaving an office. All kinds of other modes are possible. The selected alternative depends on the kind of protection that is desired in the space on the first side 11a of the wall 11.

In principle, the telephone 20 may be arranged to provide for switching to only one desired mode, but in an embodiment, the transmitter 12 transmits information indicating the desired mode switch. In this case, receiver 24 determines the required mode switch from the received signal and causes the telephone function unit 22 to switch mode accordingly. Thus, the telephone 20 might be switched to a completely off mode upon entering a space, with a first type of receiver (e.g. upon entering an aircraft) and to a soundless ringing mode upon entering another space, e.g. a restaurant.

In principle, the switching may be applied to all suitably arranged telephones 20. But in an embodiment the transmitter 12 transmits information indicating a class of telephones 20 that must execute a mode switch (and in addition the desired mode switch for that class). In this case, receiver 24 determines from the received signal and class information stored in the mobile telephone 20 whether a mode switch is required and causes the telephone function unit 22 to switch mode accordingly. Thus, the switching can be selective for different users, for example switching off telephones of employees but not of customers in a workplace, or switching off telephones of everyone except security personnel for example.

In a further embodiment, the mode change may also depend on a mode to which the mobile telephone has been switched. For example, the user may set a mode wherein the mode is switched as described above, or to a mode in which no automatic mode change is allowed. In another example, the mode change may be made conditional upon the urgency of the mode change, the user selecting for example to allow automatic switch off on entry into an aircraft, but not upon entry into a busy public space.

Similarly, when the mobile telephone 20 is carried through the entrance 10 in the second direction, various kinds of mode switching are possible. In principle, the telephone function unit 22 switches to a normal operating mode when the receiver 24 signals detection that the mobile telephone 20 has been carried through the entrance 10 in the second direction (provided of the mobile telephone 20 has not been switched off entirely). In an embodiment, the mobile telephone has a memory (not shown) for storing information about the mode the telephone function unit 22 was in before the mobile telephone was carried through the entrance in the first direction. When the receiver 24 detects that the mobile telephone 20 is carried out in the second direction, it switches back the telephone function unit 24 to the mode according to the stored information in this embodiment. Thus, the mobile telephone will return back in its original state when the user leaves the protected space.

Many embodiments exist for measuring whether the mobile telephone 20 is carried into the space on one side 11a of the entrance 10. In an embodiment that is described by way of non-limiting example, the transmitter 12 may make use of an electromagnetic radiated signal in some predefined frequency band. The transmitter units 120a,b produce distinguishable signals, for example at different frequencies or having a different modulation pattern. Preferably, the antenna's 122a,b are directional, so that a first and second region of space 14, 16 are created, the first region 14 containing a larger amplitude of radiation from a first one of the antenna's 122a than from the second one of the antenna's 122b and vice versa in the second region 16. These regions may be on one side of the entrance 10, as shown in figure 1, so that only one unit 12 is needed, or on two sides of the entrance 10 as shown in figure 3, which makes it easier to distinguish the two regions 14, 16 from the transmitted signals. As a further alternative, one may use a gate, such as used in shops to detect theft, instead of one or more of the antenna's 122a,b. When receiver 24 detects the radiation, it detects from the radiation which of the transmitter units 120a,b produces the larger amplitude (from which it follows in which region of space the mobile telephone 20 is currently located). When the mobile telephone 20 is carried in the first direction, receiver 24 detects a transition from a state in which the first transmitter unit 120a produces the largest amplitude to a state in which the second transmitter unit 120b produces the largest amplitude. When receiver 24 detects this transition it signals to telephone function unit 22 to make a mode switch associated with this transition. In addition, receiver 24 may detect additional information associated with the signals from transmitter units 120a,b which information selects the required mode change and/or a class of mobile telephones 20 to which this mode change should be applied. Dependent on this information, receiver 24 signals the telephone function unit 22 to make the selected mode change.

If the receiver detects the opposite type of transition: from a state in which the second transmitter unit 120b produces the largest amplitude to a state in which the first transmitter unit 120a produces the largest amplitude, it signals the receiver to make the mode change as described for passage through the entrance 10 in the second direction.

The electromagnetic radiation transmitted may be in the form of bluetooth signals containing commands to control mode switches. This allows low cost decoding of commands for the mobile telephone. The mobile telephone is arranged to make execution of the commands dependent on detection whether the mobile telephone passes through the entrance 10 and selects the commands conditioned on the detected direction of passage. This may be realized for example by arranging the mobile telephone to store detection information about passage and direction in a memory (not shown) in the mobile telephone, e.g. information representing whether the mobile telephone is inside or outside the space and/or whether passage is in progress. An execution unit (not shown) for bluetooth commands (or any other general type of commands) is provided in the mobile telephone. The commands that the execution unit is arranged to execute include entry conditioned commands. During execution of entry conditioned commands the execution unit consults the memory and executes the commanded function dependent on the passage information in the memory.

Of course, the invention is not limited to the specific type of entry detection described. For example, instead of electromagnetic radiation, other types of wireless signals may be used, such as ultrasound or vibrations passed to the user via the floor. Also, other types of information than amplitude may be used to distinguish presence of the mobile phone in different region.

For example phase information may be used. The transmitter units 120a,b may be arranged to alternately transmit pulses of a signal of the same frequency (possibly with a pause between pairs of pulses from different antenna's 122a,b so as to facilitate identification which antenna 122a,b transmitted the pulse). In this case the receiver 24 can be arranged to measure a phase change between the signal in pulses received from different ones of the transmitter units 120a,b. This phase change is a function of the difference between the distance to the different antenna's 122a,b. A phase change in a first direction can be used as an indication that the mobile phone 20 is in the first region 14 and a phase change in a second direction (opposite to the first direction) can be used as an indication that the mobile phone 20 is in the second region 16. From the variation of the phase change over time the receiver can determine the direction in which the mobile phone 20 is carried through the entrance 10.

Similarly a difference between the phase of modulation signals modulated onto the signal from the first and second antenna 122a,b respectively. If the phase of the modulation from the first antenna 122a leads that of the second antenna 122b, presence in the first region 14 is detected. If the phase of the modulation from the second antenna 122b leads that of the second antenna 122a, presence in the second region 16 is detected. As an alternative, the mobile phone may be arranged signals, so as to allow the transmitter 12 to determine the position of the mobile phone 20 (for example from the phase difference between signals received at the antenna's 122a,b) and to signal back this information, or at least information to switch mode, back to the mobile telephone 20.

As a further alternative, the entire space on one side 11a of the wall 11 might be filled with a signal to the mobile phone 20 to change to a specified mode. In this case the mobile telephone 20 is arranged to switch to the specified mode as long as a sufficient amplitude of such a signal is present and to switch back to another mode once insufficient amplitude is present. This has the advantage that it allows temporal switching for example switching off mobile phones 20 in a space during a conference sessions in that space, and switching back on the mobile phones 20 during intermissions in the conference sessions.

However, use of a single signal may cause mobile phones 20 to switch mode unintentionally if the signal leaks outside the space. This is solved by signals that detect the direction of entry. In an embodiment, the mobile phone is arranged to store location mode information which is set and cleared upon detection of entry to and exit from the space respectively, for example by an arrangement as shown in figure 1. The mobile telephone 20 is arranged to make mode changes in response to the signal that is present in the entire space only if the location mode indicates that it has entered into the space, without subsequent exit. Thus, the advantage of allowing temporal changes can be combined with protection against unintentional switching due to leaking signals.

It will now be appreciated that the invention provides for a system that switches mobile phones 20 to a specified (predetermined or dynamically selected) mode upon entry into a space. This space may be a room in a building, a space outdoors from a building or a space in a vehicle, like an aircraft. Thus, nuisance caused by mobile phones can be reduced.

## Claims

1. A mobile telephone control system for a user space, the system comprising
- a transmitter located to generate a wireless control signal at least at an entrance to the user space;
- a mobile telephone comprising a receiver for the wireless control signal and a telephone function unit for passing calls to a user of the mobile telephone, the receiver being arranged to cause the telephone function unit to switch between different modes of operation upon detection, from the wireless signal, that the mobile phone passes said entrance.

2. A system according to Claim 1, wherein said modes of operation comprise
- a no audible alarm mode, which the telephone function unit switches to upon detection that the mobile telephone enters said space through the entrance and
- a normal operating mode, which the telephone function unit switches to upon detection that the mobile telephone leaves said space through the entrance.

3. A system according to Claim 2, wherein said no audible alarm mode is a mode in which the telephone function unit is disabled from passing calls.

4. A system according to Claim 1, wherein the transmitter is arranged to include a mode selection code in the control signal, the receiver being arranged to cause the telephone unit to switch to the mode dependent on the selection code.

5. A system according to Claim 4, arranged to cause the telephone unit to switch to the selected mode upon entry into said space and back to a predetermined mode upon leaving said space.

6. A system according to Claim 1, the mobile telephone comprising a memory for storing information about a mode in which the mobile telephone was prior to mode switching on entry into said space, the mobile telephone being arranged to cause the telephone unit to switch back to the stored mode upon leaving said space.

7. A system according to Claim 1, wherein the control signal transmitted contains a time dependent mode selection code, the receiver being arranged to cause the telephone unit to switch between different modes of operation upon detection, from the wireless signal, that the mode selection code has changed and the mobile telephone is in said user space and upon detection that the mobile telephone enters said user space.

8. A system according to any of Claims 1 to 7, wherein the transmitter is directional, a first regional part of the wireless signal in a first region near the entrance differing from a second regional part of the wireless signal in a second region closer to the entrance than the first region, the receiver being arranged to cause the telephone function unit to switch to a first mode upon detection of transition from the second regional part to the first regional part and to a second mode upon detection of transition from the first regional part to the second regional part.

9. A system according to any of Claims 1 to 7, wherein the transmitter is directional, a first regional part of the wireless signal in a first region near the entrance differing from a second regional part of the wireless signal in a second region closer to the entrance than the first region, the receiver being arranged to cause the telephone function unit to switch to a first mode upon detection of the first regional part and to a second mode upon detection of the second regional part.

10. A mobile telephone comprising
- a telephone function unit for passing calls to a user of the mobile telephone that is switchable between different modes of operation;
- a receiver for a wireless control signal, the receiver being arranged to cause the telephone function unit to switch between the different modes upon detection, from the wireless signal, that the mobile phone passes through an entrance space in which said wireless control signal is present.

11. A mobile telephone according to Claim 10, wherein said modes of operation between which the receiver causes the function unit to switch comprise a no audible alarm mode a normal operating mode.

12. A mobile telephone according to Claim 11, wherein said no audible alarm mode is a mode in which the telephone function unit is disabled from passing calls.

13. A mobile telephone according to Claim 10, wherein the receiver is arranged to cause the telephone unit to switch to a mode dependent on by a selection code from the received signal.

14. A mobile telephone according to Claim 13, arranged to cause the telephone unit to switch to the selected mode upon entry into said space and back to a predetermined mode upon leaving said space.

15. A mobile telephone according to Claim 10, the receiver being arranged to cause the telephone unit to switch between different modes of operation upon detection, from the wireless signal, that a mode selection code has changed and the mobile telephone is in said user space and upon detection that the mobile telephone enters said user space.

16. A mobile telephone according to Claim 10, the mobile telephone comprising a memory for storing information about a mode in which the mobile telephone was prior to mode switching on entry into said space, the mobile telephone being arranged to cause the telephone unit to switch back to the stored mode upon leaving said space.

17. A mobile telephone according to any one of Claims 10 to 16, the receiver being arranged to detect a region distinguishing aspect of the wireless signal and to cause the telephone function unit to switch to a first mode upon detection of transition of that aspect from indication a first region to indication of a second region and to a second mode upon detection of transition from that aspect from indication the second region to indication of a first region.

18. A building comprising an enclosed space provided with a transmitter for transmitting, in that space, a wireless signal for a mobile telephone that is arranged to switch between different modes of operation upon detection of the wireless control signal.

19. A building according to Claim 18, the space having an entrance, the transmitter being arranged to transmit the wireless signal so that for the mobile phone the wireless signal is detectably different in a first and second region of the space that have to be passed successively upon passage to the entrance.
